# EUROPEAN PATENT APPLICATION

(11) **EP 1 959 218 A1**
(43) Date of publication of application: **20.08.2008**
(21) Application number: 07425083.8
(22) Date of filing: 15.02.2007
(51) Int. Cl.: F26B 25/22

(54) **Process for controlling, checking and adjusting instantaneous values of ceramic products submitted to drying**

(71) Applicant: IMAS S.P.A. Industria Meccanica, 41042 Fiorano Modenese MO (IT)
(72) Inventor: Braglia,Gino, 41042 Fiorana Odenese (Modena) (IT)
(74) Representative: Guareschi, Antonella

(57) **Abstract**

A process for checking and adjusting moisture content and temperature of a ceramic product submitted to drying, which includes acquisition of certain instantaneous values during or after drying of the product, such as moisture content, temperature and weight, using sensors (6, 8) and/or weighing scales and use of one or more of these acquired values to determine the drying conditions, possibly for feedback control of the drying parameters of the dryer (1). Drying parameters include drying cycle length; burner temperature; air flow. Parameters are manually set by an operator or set or suggested by special-purpose software, depending on cost requirements.

## Description

This invention relates to a process for checking and adjusting or maintaining parameters of ceramic products during the drying process.

The invention further relates to a drier for carrying out such process.

In prior art ceramic processes, dried tiles at the exit of the drier are required to have less than 1% residual moisture content.

Furthermore, tiles at the exit of the drier are required to have a virtually fixed (predetermined) temperature, depending on the expected post-drying enameling applications.

Still in prior art, these tile parameters are checked and/or set manually through repeated drying processes to reach the proper desired tile parameter.

No automatic drying system is currently available to continuously measure residual moisture content and/or temperature of the product passing through the drier, at the start, at the end or in the intermediate modules.

The residual moisture content checking process is wholly manual; for instance, at the start, the following steps are required:
1- Manually picking up a tile between the press and the entry of the drier;
2- Weighing such tile by a scale (which is usually located in a testing laboratory a few hundreds of meters from the drier);
3- Reintroducing the weighed tile in the drier;
4- Picking up the tile at the exit of the drier;
5- Weighing the dried tile by the same scale;
6- Further drying the tile in a stove (in the laboratory) and waiting until drying is completed.

Such process provides the following parameters:
1- Moisture content of the entering tile;
2- Residual moisture content after drying.

The above steps are time-consuming, and can even take an hour (including a 25-minute drying cycle).

If residual moisture content exceeds the desired value, the following drier controlling parameters have to be manually adjusted:
1- Drying cycle length (setting a longer time in the drier);
2- Temperature (increasing burner temperature);
3- Air flow (opening air dampers or increasing the fan motor rpm).

The tiles produced by the drier during the manual test time had an excessive moisture content, which might cause the material to burst in the firing kiln (thereby generating production losses as well as considerable kiln cleaning problems).

There is no way to optimize the drying curve during start up, before filling the drier (by possibly introducing a small number of pieces), because the drying process has different characteristics depending' on whether the drier is full or empty, due to the moisture released from the tiles, which increases the relative ambient moisture and changes the gradient of water release from the tiles.

Therefore, calibration of the drying curve should be repeated for each new product. Moisture checks should be carried out in the laboratory several times a day.

As a rule, most ceramic manufacturers select a moisture content setpoint of about 0.0%, to solve any problem or to avoid the need of continuously checking the drying degree.

The object of this invention is to obviate the above drawbacks by providing a system, i.e. a process for detecting the instantaneous values of ceramic products before or after drying by continuous acquisition of such values, particularly temperature or moisture content, and for using such acquired values to adjust the drying parameters of the drier to obtain the proper and desired values.

The above parameters are continuously detected.

Another object, as better explained hereafter is to check such parameters not only at the entry and exit but also throughout the modules of the drier, to record and ascertain their values and find which module/s operate more properly.

A further object is to provide automatic feedback, by means of a special-purpose computer-controlled process, for adapting the drying curves to the required settings.

Simple display of the residual moisture content at the exit of the drier would limit time consumption, but the drier's parameters would still have to be adjusted manually, whereas automatic feedback would afford self-controlled operation of the drier, and ensure that the exit moisture is always constant and compliant with the setpoint.

In addition to the considerable advantage of avoiding the need of optimizing the drying cycle and curve for each product, an important energy saving advantage would be achieved, in that the moisture content setpoint would no longer be about 0.0% but a sufficient and required value (typically from 0.5 to 1%).

Some data will be mentioned below, to highlight the advantages that can be achieved using the inventive system and related drier.

Considering:
- An average drier consumption of 1200 kcal per kg of evaporated water,
- An average moisture content of 6% at the entry and of 0.5% at the exit obtained with the inventive system,
- A tile output of about 350 mq/h having an average weight of 20 kg/mq.

Then 350 x 20, i.e. 7,000 kg/h of product are obtained, i.e. 420 kg of total water to be evaporated (6%), with (0.5%) energy saving associated to 35 kg/h not having to be evaporated, which corresponds to 35 x 1200 = 42000 kcal/h x 21 working hours = 882,000 kcal/day x 330 days = 291,060,000 kcal/year / 8,250 kcal/Nm3 of methane = 35,280 Nm3 of methane/year.

Considering a cost of 0.27 €/Nm3 of methane, this leads to a saving of 9,525 €/year.

Such saving only accounts for a single drier: Ceramic factory has 4 driers on average and the largest ones can even have more than 20 driers.

Furthermore, as mentioned above, the present system provides cycle optimization in response to the need of obtaining a specific temperature of the exiting product.

Indeed, the temperature required at the exit of the drier depends on the treatment that is expected to follow the drying process.

Measurement is currently performed using a temperature sensor, e.g. a laser sensor, which indicates the temperature of the workpiece: if temperature is too high or low, the operator will change the above mentioned parameters (cycle length, burner temperature or air flow).

The present system allows to conveniently provide a feedback control of the relevant parameters, like in the above case concerning the humidity sensor, and to assure that the product at the exit of the drier has the desired temperature.

The positions of the two types of sensors are described below.

The advantages that can be achieved by this second type of acquisition are associated to a better execution of the next step, allowing to obtain optimal results and a smaller number of rejects or imperfect products.

The above objects and advantages are achieved by the process for controlling, checking and adjusting instantaneous values of ceramic products submitted to drying of this invention, which is characterized by the annexed claims.

These and other features will be more apparent from the following description of a few embodiments, which are shown by way of example and without limitation in the accompanying drawings, in which:
- Figure 1 is a diagrammatic view of the system for adjustment of the inventive drying apparatus;
- Figure 2 shows the system of Figure 1 in a first variant embodiment;
- Figure 3 shows the system of Figure 1 in a second variant embodiment;
- Figure 4 shows a variant in which ceramic product data are captured, namely temperature values.

The present invention relates to a process for exerting direct control on the product before, after or during drying in the drier as a function of its moisture content, temperature and weight values whereby, based on acquired values, drying parameters are adjusted, i.e. temperature, air flow and cycle length.

Continuous acquisition of moisture content values will be described below.

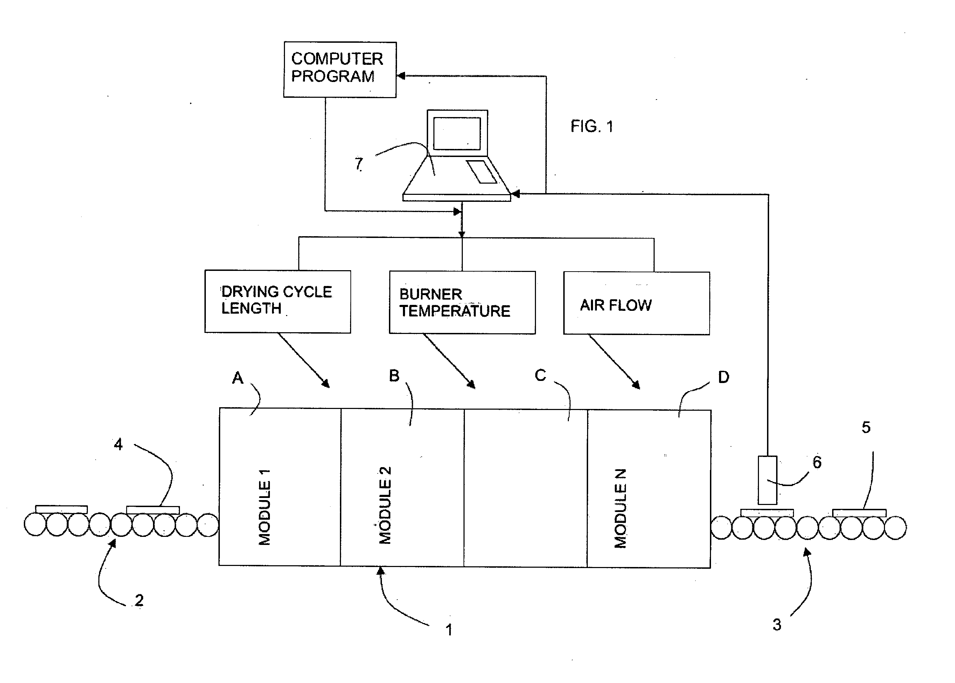

Referring to Figure 1, numeral 1 generally designates a horizontal drier, here with a modular design, i.e. composed of a plurality of independent modules A, B, C, D.

The drier 1 may preferably have a multi-level configuration.

A conveyor, i.e. a roller bed 2, is provided at the entry, and an additional roller bed conveyor 3 is provided at the exit, for carrying the dried products 5 to the next workstation.

Green ceramic products 4, obtained from a body generally formed of clay and water and/or of multiple varieties of bodies, enter the drier.

The drying process is known to be based on physical heating of the product and the environment around it for evaporating the binding water contained in the clay; such evaporation causes partial compaction and hardening of the dried product volume.

A humidity sensor 6 is placed on the roller bed 3 at the exit of the drier (i.e. downstream from the unloading elevator, not shown), for instantaneously measuring the residual moisture content of the product 5 after drying.

The acquired value is transmitted to a computer 7 over a network.

Here, a special-purpose software program may decide whether to change one or more drying parameters depending on priorities such as managing costs, fuel costs, storage times and others.

Simple display of the residual moisture content at the exit of the drier would limit time consumption, but the drier's parameters would still have to be adjusted manually, whereas automatic feedback would afford self-controlled operation of the drier, and ensure that the exit moisture is always constant and compliant with the setpoint.

As mentioned above, the recorded moisture content is displayed on the control panel, whereupon it can be used for feedback control of the drying parameters, namely:
1- Drying cycle length (setting a longer time in the drier);
2- Temperature (increasing burner temperature);
3- Air flow (opening air dampers or increasing the fan motor rpm).

The action to be taken may be either manually selected by the operator, by setting reference parameters or decided or suggested by special-purpose software, considering the cost situation of the relevant ceramic company; hence:
1- as the cycle length is increased or decreased, the press output is accordingly increased or decreased; depreciation of a higher output from the same production line has to be considered;
2- As temperature is increased, more methane is consumed;
3- As air flow is increased, more power is consumed.

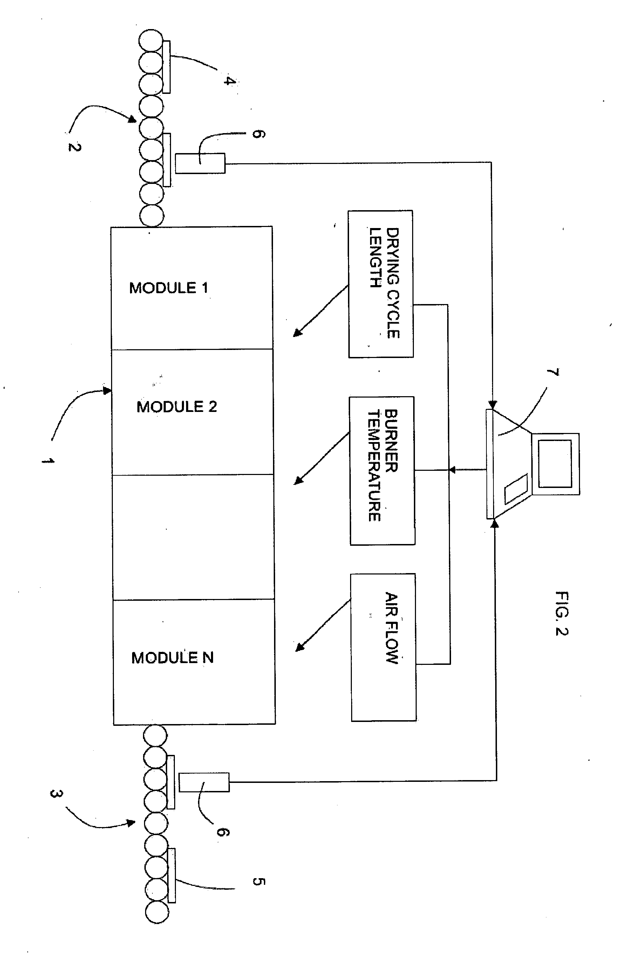

As shown in Figure 2, the humidity sensor 6 may be also placed at the entry of the drier.

This arrangement provides the advantage of:
1- knowing the moisture content of the sprayed product;
2- obtaining a perfect cost analysis.
   The drier 1 currently has an energy consumption quantification system which, using a flow meter on the gas train, indicates the number of Nm3 (normal cubic meters) flowing during a certain time and counts the number of products entering the drier during the same time, whereby consumption is given as Nm3 consumed per piece or square meter of tiles produced, even though the drier's consumption would be actually given by the amount of heat supplied to remove a certain amount of water from the tile.
   From the values of entry moisture content, exit moisture content, number of pieces produced (and weight thereof) and amount of methane used, the average consumption of the drier can be exactly determined.
3- being able to adjust the drying cycle length:
   when a lower moisture content is found at the entry,
   the drying parameters may be changed for energy saving purposes.

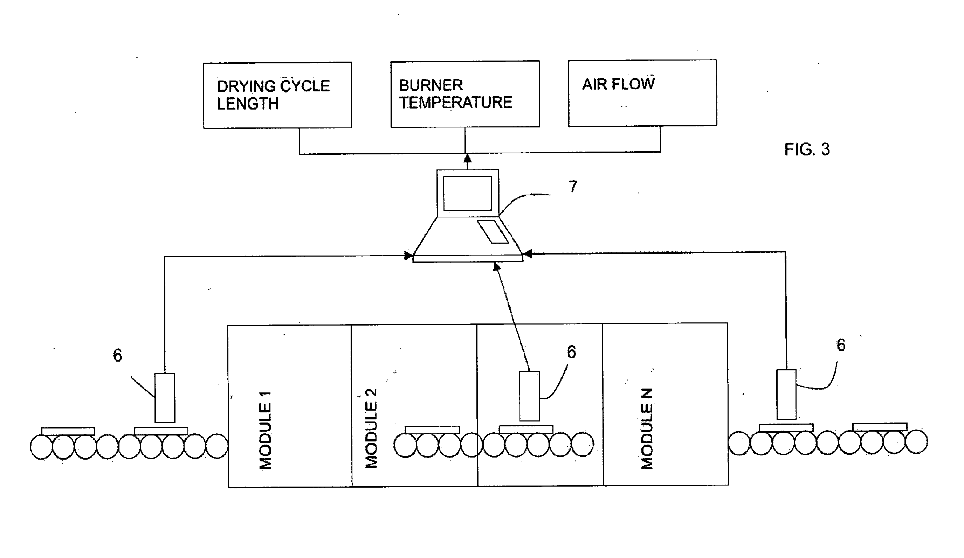

Figure 3 shows a further variant of the inventive system, in which the humidity sensor 6 is located in each module of the drier to determine the drying loss for each module.

In a further variant, not shown herein, as an alternative to the above, the humidity sensor 6 is placed directly on the product 4 as it passes through the drier 1, so that a nearly analog curve of the drying process may be provided (using a high sampling rate).

Finally, the humidity sensor 6 might be placed at the entry of the firing kiln to check that moisture content is below the setpoint so that, whenever the latter is exceeded, it can either activate an alarm for discarding the workpiece or adjust (extend) the drying time in the firing kiln.

As mentioned above, the present process allows to check and adjust both the moisture content and the temperature of the dried ceramic product, particularly when a specific temperature value has to be ensured (at the exit of the drier), for convenient processing of such product in later steps.

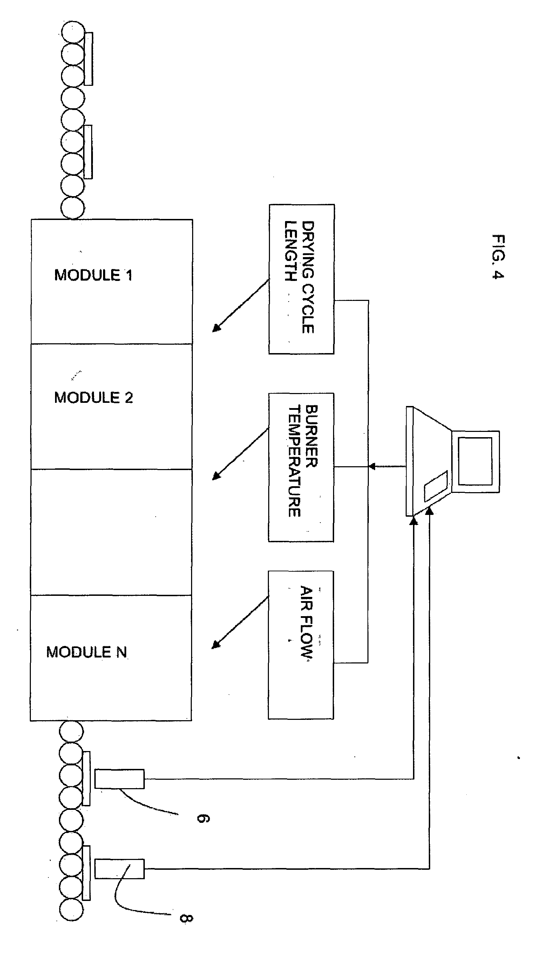

With particular reference to Figure 4, a temperature sensor 8 adjacent the above mentioned humidity sensor 6 is provided at the exit, near the roller bed 3.

Such sensor 8 senses the temperature of the product as it passes, and this value is used, as mentioned above, for feedback control of the drying parameters of the drier 1, namely:
1- Drying cycle length (setting a longer time in the drier);
2- Temperature (increasing burner temperature);
3- Air flow (opening air dampers or increasing the fan motor rpm).

Once again, the action to be taken may be either manually selected by the operator, by setting reference parameters or decided or suggested by special-purpose software, considering the specific situation.

The temperature sensor 8 may be located not only at the exit of the drier 1 but also in the proximity of the subsequent processing apparatus, e.g. the enameling kiln, to record the exact temperature value at the entry of such machine; the value acquired near the processing apparatus is used for feedback control of the drying parameters of the drier.

A variant embodiment will be now described for measuring the residual moisture content of the product that has been dried in the drier 1, in which weighing scales are arranged along the line, at the entry and at the exit of the drier 1.

Products are weighed as they pass along the line, wherefore the cycle need not be stopped. The difference between the acquired values corresponds the amount of water that has been dried: the residual moisture content can be determined by only providing the humidity sensor 6 at the entry, and on-line weighing.

The above process may be also applied to the intermediate modules A, B, C, D, by equipping them with suitable scales.

The choice between the first moisture detection system (only sensors 6) and the second system (sensor 6 and scales) depends on cost and commercial considerations, to be determined case by case.

While reference has been made herein to a drier 1 having four modules, any number of modules may be obviously provided.

In short, the above process for controlling, checking and adjusting instantaneous values of ceramic products submitted to drying, allows to directly control products before, after or during drying through the drier 1, by instantaneous and continuous detection and acquisition of instantaneous values and use of one or more of said values to determine the drying conditions and possibly to provide feedback control of the drying parameters of the drier 1 and adjust the reference values to their respective setpoints.

Such feedback control of the drying parameters is either carried out manually by an operator or carried out or suggested by special-purpose software, depending on cost requirements.

The above mentioned detected values are one or more of the following:
a. residual moisture content of the ceramic product (5),
b. exit temperature of the product (5),
c. weight of the ceramic product (5),

- moisture content being determined by a humidity sensor (6); temperature being determined by a sensor (8); and weight being determined by two or more weighing scales;
- such values being acquired at the entry and/or exit of the drier (1) or in the intermediate modules (A, B, C, D).

Control of the drying parameters relates to one or more of the following values:
a. Drying cycle length, i.e. extension or reduction of the time in the drier;
b. Burner temperature;
air flow, i.e. adjustment of air dampers or fan motor rpm.

The present invention further protects the computer program containing computer program codes for carrying out the above control and processing steps, when such program is run on a computer.

Finally, the present invention protects the drier for ceramic products, comprising the means, such as the weighing scales and the sensors for carrying out the inventive process.

## Claims

1. Process for controlling, checking and adjusting instantaneous values of ceramic products submitted to drying, **characterized in that** it directly controls products before, after or during drying through the drier (1), by instantaneous and continuous detection and acquisition of instantaneous values and use of one or more of said values to determine the drying conditions and possibly to provide feedback control of the drying parameters of the drier (1) and adjust the reference values to their respective setpoints; said feedback control of the drying parameters being either carried out manually by an operator or carried out or suggested by special-purpose software, depending on cost requirements.

2. A process as claimed in claim 1, **characterized in that** said detected values are one or more of the following:
a. residual moisture content of the ceramic product (5),
b. exit temperature of the product (5),
c. weight of the ceramic product (5),
- moisture content being determined by a humidity sensor (6); temperature being determined by a sensor (8); and weight being determined by two or more weighing scales;
- said values being acquired at the entry and/or exit of the drier (1) or in the intermediate modules (A, B, C, D).

3. A process as claimed in claim 1, **characterized in that** said control of the drying parameters relates to one or more of the following values:
a. Drying cycle length, i.e. extension or reduction-of the time in the drier;
b. Burner temperature;
c. Air flow, i.e. adjustment of air dampers or fan motor rpm.

4. A process as claimed in claims 1 and 2, **characterized in that** said values are acquired:
a. at the exit of the drier (1), or
b. both at the exit and at the entry of the drier (1), or
c. in the intermediate modules (A, B, C, D)

5. A process as claimed in claim 2, **characterized in that** the humidity sensor (6) is placed directly on the product as it passes through the drier (1), so that a nearly analog curve of the drying process may be provided.

6. A process as claimed in claim 2, **characterized in that** moisture content of the ceramic product is acquired at the entry of the firing kiln to check that it is below the setpoint: whenever the latter is exceeded, an alarm is activated for discarding the workpiece or adjust the drying time in the firing kiln.

7. A process as claimed in claim 1, **characterized in that** temperature is acquired in the proximity of the subsequent processing apparatus, so that an instantaneous value is acquired and used for feedback control of the drying parameters, as a function of the exact temperature value at the entry of such machine.

8. A computer program containing computer program codes for carrying out the control and processing steps as claimed in claims 1, 2 and 3 when such program is run on a computer.

9. A computer program as claimed in claim 11, **characterized in that** said program is provided on a computer readable support.

10. A drier for ceramic products, **characterized in that** it comprises the means and sensors for carrying out the process as claimed in the preceding claims.
